(19) Europäisches Patentamt
European Patent Office
Office européen des brevets

(11) EP 0 780 002 B1

(12) # EUROPÄISCHE PATENTSCHRIFT

(45) Veröffentlichungstag und Bekanntmachung des Hinweises auf die Patenterteilung:
**09.06.1999 Patentblatt 1999/23**

(21) Anmeldenummer: **95929762.3**

(22) Anmeldetag: **06.09.1995**

(51) Int Cl.$^6$: **G06K 9/00**

(86) Internationale Anmeldenummer:
**PCT/DE95/01210**

(87) Internationale Veröffentlichungsnummer:
**WO 96/07976 (14.03.1996 Gazette 1996/12)**

(54) **VERFAHREN UND VORRICHTUNG ZUR REKONSTRUKTION VON IN RASTERFORM VORLIEGENDEN LINIENSTRUKTUREN**

PROCESS AND APPARATUS FOR RECONSTRUCTING RASTER-SHAPED LINE STRUCTURES

PROCEDE ET APPAREIL POUR RECONSTRUIR DE STRUCTURES CONSTITUEES DE LIGNES SOUS FORME D'UNE TRAME

(84) Benannte Vertragsstaaten:
**BE CH DE ES FR GB LI SE**

(30) Priorität: **08.09.1994 DE 4432002**

(43) Veröffentlichungstag der Anmeldung:
**25.06.1997 Patentblatt 1997/26**

(73) Patentinhaber: **Siemens Nixdorf Informationssysteme AG**
**33106 Paderborn (DE)**

(72) Erfinder:
- **UEBERREITER, Birgit**
  **D-85579 Neubiberg (DE)**
- **DENGLER, Joachim**
  **D-69151 Neckargemünd (DE)**

(74) Vertreter: **Epping, Wilhelm, Dr.-Ing. et al**
**Patentanwalt**
**Postfach 22 13 17**
**80503 München (DE)**

(56) Entgegenhaltungen:
**EP-A- 0 551 086**

- **9TH INTERNATIONAL CONFERENCE ON PATTERN RECOGNITION (IEEE CAT. NO.88CH2614-6), ROME, ITALY, 14-17 NOV. 1988, ISBN 0-8186-0878-1, 1988, WASHINGTON, DC, USA, IEEE COMPUT. SOC. PRESS, USA, Seiten 329-333 vol.1, DANIELSSON P -E ET AL 'Rotation-invariant operators applied to enhancement of fingerprints'**
- **MATHEMATICAL IMAGING: WAVELET APPLICATIONS IN SIGNAL AND IMAGE PROCESSING, SAN DIEGO, CA, USA, 15-16 JULY 1993, Bd. 2034, ISSN 0277-786X, PROCEEDINGS OF THE SPIE - THE INTERNATIONAL SOCIETY FOR OPTICAL ENGINEERING, 1993, USA, Seiten 2-12, COIFMAM R R 'Adapted waveform analysis, wavelet-packets and local cosine libraries as a tool for image processing'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 780 002 B1

## Beschreibung

Die Erfindung betrifft ein Verfahren zur Rekonstruktion von in Rasterform vorliegenden Linienstrukturen. Solche Linienstrukturen können zur Identifizierung von Personen eingesetzt werden. Zur Identifizierung von Personen werden meist deren Fingerabdrücke verwendet, aber auch andere Linienstrukturen, wie die der Retina, das Adergeflecht in der Netzhaut des Auges. Auch die Linienstruktur in der Iris des menschlichen Auges kann zu einer eindeutigen Identifikation einer Person verwendet werden.

Um die genannten Linienstrukturen zur Personenidentifizierung verwenden zu können, müssen eine Vielzahl solcher Linienstrukturen in einer Datenbasis zusammengefaßt werden. Eine Linienstruktur einer zu identifizierenden Person wird dann mit dem Inhalt dieser Datenbasis verglichen. Immer größer werdende Sammlungen von Linienstrukturen übersteigen inzwischen die Möglichkeiten, visuelle Vergleiche in vertretbarer Zeit durchzuführen. Jedoch stehen auf Grund der rasanten Entwicklungen in Bereichen der Speichermedien und den Techniken der digitalen Bildverarbeitung Werkzeuge zur Verfügung, die den Entwurf leistungsfähiger Erkennungssysteme ermöglichen.

Es ist aus Barry Blain, Introduction To Fingerprint Automation, Home Office Police Department, Police Systems Research & Development Group, Publication No. 1/93, 1993, ein Verfahren bekannt, mit dem die Linienrichtungen bestimmbar sind. Zur Bestimmung der Linienrichtung erfolgt eine Parkettierung des Bildes in leicht überlappende Teilbereiche einer Größe von 20 x 20 Bildpunkten, wobei sich vier bis sechs Bildpunkte am Rand der Teilbereiche überlappen. Nach der Richtungsbestimmung, die durch regionale Fourier-Transformationen erfolgt, wird eine gerichtete Glättung mit nachfolgender Binarisierung vorgenommen. Die Schwellwerte zur Binarisierung werden durch Histogramme in den Teilbereichen bestimmt. Das dabei entstehende Binärbild enthält immer noch starke Störungen, die im Nachhinein durch diverse Konsistenzkriterien korrigiert werden. Eine fehlerfreie Korrektur der Störungen, beispielsweise das Zusammenfließen von Gebieten, die nicht zusammengehören, oder die Trennung von Linien, kann nicht immer erwartet werden.

Um eine hohe Verarbeitungsgeschwindigkeit beim Erkennen von Linienstrukturen zu erreichen, wird bei der Speicherung von Linienstrukturdaten häufig auf die Speicherung wesentlicher Informationen, wie z.B. die genaue Lage und Form von Linien, sowie ihrer Dicke verzichtet. Zudem liegen die zu Kodierenden Linienstrukturen häufig nur in verminderter Bildqualität vor. In Teilbereichen ist das Bild beispielsweise verwischt oder weist ungenügenden Kontrast auf. Bei einer Kodierung gemäß dem Stand der Technik wird die Linienstruktur in solchen Bereichen abgeschätzt. Aus dem gespeicherten Binärbild der Linienstruktur ist dann jedoch nicht mehr erkennbar, mit welcher Sicherheit die einzelnen Bildabschnitte aus dem zugrundeliegenden Bildmuster erzeugt wurden.

Der vorliegenden Erfindung liegt die Aufgabe zugrunde, ein Verfahren zur Rekonstruktion von in Rasterform vorliegenden Linienstrukturen aufzuzeigen, bei dem mit geringst möglichem Rechenaufwand eine zuverlässige und alle wesentlichen Informationen einer Linienstruktur beibehaltende Kodierung der Linienstruktur erreicht wird.

Diese Aufgabe wird durch die im Patentanspruch 1 angegebenen Merkmale gelöst. Ausgestaltungen und Weiterbildungen der Erfindung sind in Unteransprüchen angegeben.

Bei dem erfindungsgemäßen Verfahren wird im Gegensatz zu bekannten automatischen Erkennungssystemen für Linienstrukturen auf wesentliche Informationen, wie z.B. die genaue Lage und Form von Linien, sowie ihre Dicke, nicht verzichtet. Durch Anwendung der Verfahrensschritte wird die reale Linienstruktur in ein Idealmodell mit einer lokal parallelen, eindimensionalen Linienstruktur überführt, wobei das Idealmodell für jeden Bildpunkt getrennt Anwendung findet. Anhand der als Antwortcharakteristik ermittelten Vektorkoeffizienten können Rückschlüsse auf die Zuverlässigkeit des Idealmodells an jedem Bildpunkt gezogen werden. Die Vektorkoeffizienten ermöglichen eine kompakte Speicherbarkeit der Linienstruktur.

Gemäß einer Weiterbildung und Ausgestaltung des erfindungsgemäßen Verfahrens wird eine Glättung der ermittelten Vektorkoeffizienten durchgeführt. Dadurch wird eine geglättete Änderung der Vorzugsrichtung von Linien erreicht.

Gemäß einer Weiterbildung und Ausgestaltung des erfindungsgemäßen Verfahrens wird das Verfahren mit mindestens einer zweiten Binomialfunktion $A(x,s)$, die einer anderen Größenskala zugeordnet ist wiederholt. Es liegen dann verschiedene Rekonstruktionen der originalen Linienstruktur vor.

Gemäß einer Weiterbildung und Ausgestaltung des erfindungsgemäßen Verfahrens wird das jeweils beste Rekonstruktionsergebnis für jedes Pixel mittels Erzeugung einer Wichtungsfunktion ausgewählt, wobei das jeweilige Auswahlergebnis in einem Speicher als Grauwertbild und als Richtungsverteilung abgelegt wird. Dadurch wird aus den verschiedenen Rekonstruktionen der originalen Linienstruktur für jeden Bildpunkt die beste Rekonstruktion ausgewählt. Die Breite der Linien und deren Abstand zueinander im Idealmodell können dadurch variiert werden. Es erfolgt somit eine Verfeinerung des Idealmodells.

Gemäß einer Weiterbildung und Ausgestaltung des erfindungsgemäßen Verfahrens wird der Betrag jedes Vektorkoeffizienten gebildet und in Form einer Qualitätskarte gespeichert. Damit ist für jeden Bildpunkt ein Qualitätsmaß verfügbar. Dieses Qualitätsmaß kann zum einen zum späteren Feststellen der Zuverlässigkeit der Linienstruktur verwendet werden. Zum anderen können mit Hilfe der Qualitätskarte charakteristische Merkmale des Fingerabdrucks

ermittelt werden. Eine Glättung des Qualitätsmaßes bewirkt zusammenhängende Bereiche guter Qualität, wie sie dem Empfinden des menschlichen Auges entspricht.

Gemäß einer weiteren Weiterbildung und Ausgestaltung des erfindungsgemäßen Verfahrens wird eine Segmentierung des Rekonstruktionsergebnisses mittels Schwellwertbehandlung der Qualitätskarte vorgenommen, bei der alle Pixel mit einer Qualität, die größer als ein Schwellwert ist, einer gültigen Linienstuktur zugeordnet werden. Die Existenz der Linien/Tal-Struktur in einem Bildbereich kann dadurch auf einfache Weise erkannt werden.

Gemäß einer weiteren Weiterbildung und Ausgestaltung des erfindungsgemäßen Verfahrens werden Singularitäten aus dem Richtungsfeld unter Zuhilfenahme eines auf dem Satz über Umlaufzahlen basierenden Verfahrens ermittelt. Eine Uberprüfung der vorhandenen Richtungsinformation in der Umgebung einer Singularität erfolgt, um die Echtheit der Singularität zu Uberprüfen. Damit können auf einfache Weise die echten Singularitäten erkannt und gesichert werden.

Gemäß einer weiteren Weiterbildung und Ausgestaltung des erfindungsgemäßen Verfahrens wird aus dem Grauwertbild mittels einer Rekonstruktion aller Pixel ein Binärbild erzeugt, indem der Grenzwert für eine Unterscheidung zwischen Weiß und Schwarz bei dem Grauwert 0 gesetzt wird. Ein solches Binärbild benötigt im Vergleich zum Grauwertbild wenig Speicherplatz und kann skelettiert werden, sodaß die Linienbreite schrittweise auf die Breite eines Pixels verringert wird. Aus dem so skelettierten Binärbild können in einer aufeinanderfolgenden Auswahl jeweils 3x3 Pixel großer Pixelbildausschnitte Minuzien erkannt werden. Diese Verzweigungen oder Linienenden werden beim Vergleich der Pixelbildausschnitte mit gleich großen, die gesuchten Strukturen enthaltenden Pixelmustern erkannt. Die zugehörigen Bildpunktkoordinaten und die Art der Minuzie werden bei positivem Vergleichsergebnis zur späteren Verwendung gespeichert. Anhand einer Auswertung der Linienqualität in der näheren Umgebung der Minuzien kann die Zuverlässigkeit der gefundenen Minuzien ermittelt werden.

Gemäß einer weiteren Weiterbildung und Ausgestaltung des erfindungsgemäßen Verfahrens wird zu Beginn des Verfahrens eine Kontrastverstärkung der in Rasterform vorliegenden Bildinformation mittels pseudologarithmischer Transformation vorgenommen. Damit werden optimale Bedingungen für die weiteren Verfahrensschritte geschaffen.

Damit können durch das erfindungsgemäße Verfahren, also durch Verwendung des Idealmodells, auch Fingerabdrucksdaten mit räumlich varianten, eindimensionalen Richtungsfiltern gefiltert werden. Diese Filter haben einen engen Bezug zu GaborFiltern. Die räumliche Varianz bezüglich Richtung und Maß wird durch lineare Superposition einer Anzahl räumlich invarianter Filter erreicht. Die gleichen Filter werden genutzt, um das geglättete Richtungsfeld und den relevanten Bereich des gesamten Bildes zu bestimmen. Die Antwortcharakteristik zu den Basisfunktionen wird auch dazu genutzt, ein Qualitätsmaß für jeden Bildpunkt zu errechnen. Dieses Konzept ist auf Grund der Steuerbarkeit und der Orthonormalität der elementaren Basisfunktionen möglich .

Nachfolgend wird ein Beispiel der Erfindung anhand der Zeichnung näher erläutert. Dabei zeigen

| | |
|---|---|
| Figur 1 | ein Blockdiagramm einer Fingerabdruckerkennung, |
| Figur 2 | ein Blockdiagramm des Verfahrensablaufs, |
| Figur 3 | einen Satz kartesischer Basisfunktionen, |
| Figur 4 | einen Satz von Wellenzugs-Basisfunktionen |
| Figur 5 | ein originales Fingerabdruckbild, |
| Figur 6 | ein durch Kontrastverstärkung und globale Grauwertkorrektur vorverarbeitetes Fingerabdruckbild, |
| Figur 7 | eine Grauwertdarstellung der Verteilung der Bildqualität, |
| Figur 8 | eine Grauwertdarstellung des Ergebnisses der Segmentation des Fingerabdruckbildes, |
| Figur 9 | eine Grauwertdarstellung des Feldes der Sinus- und Kosinus-Komponenten von Richtungsvektoren, |
| Figur 10 | eine Grauwertdarstellung des Feldes des Arcus von Richtungsvektoren, |
| Figur 11 | eine Grauwertdarstellung von Singularitäten im Fingerabdruckbild, |
| Figur 12 | eine Grauwertdarstellung des gefilterten Fingerabdruckbildes, |
| Figur 13 | eine Binärdarstellung des gefilterten Fingerabdruckbildes, |
| Figur 14 | eine Binärdarstellung des skelettierten Fingerabdruckbildes, und |
| Figur 15 | eine Binärdarstellung des Kodierungsergebnisses einschließlich globaler Singularitäten. |

Das Blockdiagramm gemäß Figur 1 zeigt die wesentlichen Komponenten einer automatischen Fingerabdruckerkennung. Ein Abbild IM eines Fingerabdrucks, das durch einen Scanner eingelesen und in eine gerasterte, zweidimensionale Grauwertbildinformation umgesetzt wurde, wird an eine Kodierungsvorrichtung EC übergeben. Dort wird das Abbild IM in nachfolgend beschriebener Weise in zur automatischen Fingerabdruckerkennung nutzbare Daten aufbereitet. Sollen diese Daten für spätere Vergleichsvorgänge zur Verfügung stehen, dann werden sie in einen als Datenbasis dienenden Speicher MEM abgelegt. Sollen die Daten jedoch nur für einen Vergleichsvorgang genutzt werden, so genügt eine Speicherung in einem, der Kodiervorrichtung ES zugeordneten Speicher MEM1. Bei Bedarf können die Daten auch in beiden Speichern MEM, MEM1 hinterlegt werden. Mit Hilfe eines Vergleichers MT, der mit den Speichern MEM, MEM1 gekoppelt ist, können die in den Speichern MEM, MEM1 enthaltenen Daten miteinander

verglichen werden.

Zunächst sollen nun die der Kodierung zugrundeliegenden Überlegungen mit einem lokalen Bildmodell erläutert werden:

Die eindimensionale kontinuierliche Theorie

Das Kernstück der Theorie ist die Annäherung, mit der die zweidimensionale Grauwertbildinformation lokal nachgebildet wird. Dies geschieht durch einen Satz von Basisfunktionen, die in optimaler Weise die erforderlichen Bedingungen erfüllen, und dabei in hohem Maße berechenbar sind. Unter sehr allgemeinen Voraussetzungen ist in "Generic Neighbourhood Operators", J.J. Koenderink , A.J. Doorn, IEEE Transactions on Pattern Analysis and Machine Intelligence, Seiten 597--605, 1992, gezeigt worden, daß ein optimaler Satz von generischen, d.h. problemunabhängigen, Bildoperatoren für den stetigen Bereich folgende eindimensionale Form aufweisen:

$$\Psi_n(x,s)=\left(\frac{1}{\sqrt{4s}}\right)^n \Phi_n(\xi)A(x,s)$$

wobei $\Phi_n$ ($\xi$) die orthonormalen Eigenfunktionen der Schrödinger-Gleichungen für den quantenmechanischen Harmonischen-Oszillator mit den Hermite Polynomen $H_n(\xi)$ sind:

$$\Phi_n(\xi)=\frac{H_n(\xi)\, e^{-\frac{\xi^2}{2}}}{\sqrt{2^n n!\sqrt{\pi}}}$$

Die skalenunabhängige Variable $\xi$ ist als

$$\xi=\frac{x}{\sqrt{4s}}$$

definiert und A(x,s) ist eine Fensterfunktion des Bereichs der Skala s, welche den zu modellierenden Ausschnitt maskiert:

$$A(x,s)=\frac{e^{\left(-\frac{x^2}{8s}\right)}}{\sqrt{8\pi s}}$$

Der Bildoperator $\Psi_n$(x,s) ist so interpretierbar, daß ein lokaler Bildausschnitt, der durch A(x,s) definiert und gewichtet ist, entwickelt wird nach einer skalenunabhängigen orthonormalen Basis der orthonormalen Eigenfunktionen $\Phi_n(\xi)$, welche die lokale Bildstruktur erklären.

Andererseits ist der Bildoperator $\Psi_n$(x,s) bis auf einen konstanten Faktor identisch mit der n-ten Ableitung des Operators null-ter Ordnung. Dies erlaubt die Anwendung des Bildoperators $\Psi_n$(x,s) als Gauß-gewichteten, Ableitungsoperator zu bezeichnen.

Das Modell im diskreten Bereich

Die Bildverarbeitung findet typischerweise in einem diskreten Raster und nicht im Kontinuum statt. Um das Konzept in die Praxis umzusetzen ist es erforderlich, die Theorie für den eindimensionalen kontinuierlichen Bereich zumindest näherungsweise im diskreten Bereich zu formulieren, ohne die entscheidenden Eigenschaften zu verlieren. Das war bisher nicht erfolgt.

Insbesondere soll die Bedingung der Orthonormalität im diskreten Bereich erfüllt sein. Einige andere Details wie beispielsweise die konstanten Koeffizienten können jedoch geopfert werden, um die diskrete Theorie konsistent zu machen. Die naheliegendste Näherung, nämlich die kontinuierlichen Filterfunktionen an diskreten Punkten abzutasten, führt nicht zum Ziel. Bei Beschreitung dieses Weges wird die Orthonormalität zerstört, und Filter, wie z.B. der

Laplace-Operator, dessen Impulsantwort Mittelwertfrei sein sollte, haben diese wichtige Eigenschaft nicht mehr.

Der Schlüssel zur Diskretisierung ist die Annäherung des Gaußkerns durch Binome, die bekannterweise die bestmögliche diskrete Annäherung an die Gauß-Funktion darstellen. Insbesondere gibt es korrespondierende Skalierungseigenschaften: Während ein Gaußkern bei Faltung mit einem Gaußkern wiederum einen Gaußkern ergibt, ergibt sich dieselbe Rekursion bei Binomialkoeffizienten als Ergebnis der Propagierung im Pascal'schen Dreieck: Explizit ergibt z.B. die Faltung zweier Binome 2. Ordnung 121 ⊗ 121 = 14641. Allgemein gilt: $B_n \otimes B_m = B_{n+m}$. Folglich ist die diskrete Wichtungsfunktion und die Basis null-ter Ordnung vollständig bestimmt durch die Forderung nach identischer Varianz der gauß'schen und der binomialen Verteilung, die durch folgende einfache Beziehung gekennzeichnet ist:

$$s = \frac{m}{2}$$

mit s als kontinuierlichem Skalenparameter des Gaußkerns (siehe oben) und m als diskrete Ordnung des Binoms.

Die höheren Ordnungen der diskreten Versionen werden bestimmt durch Nutzung des Umstands, daß die Bildoperatoren $\Psi$ bis auf eine Konstante als Ableitung interpretierbar sind. Im Diskreten werden die Ableitungen durch Least-Square-Schätzung von entsprechenden Taylorkoeffizienten bei binomial gewichteten Daten bestimmt. Ein Verfahren zur einfachen und effizienten Bestimmung dieser diskreten Ableitungen ist in M. Hashimoto and J. Sklansky, "Multiple-order derivatives for detecting local image characteristics", Computer Vision, Graphics and Image Processing, 39: 28--55, 1987, beschrieben.

Diese Maßnahmen gewährleisten die Orthogonalität der zugrundeliegenden diskreten Basis. Orthonormalität wird erreicht durch die explizite Forderung numerischer Normierung.

Um eine schlüssige und einfache Formulierung zu erreichen, sind im folgenden die kontinuierlichen Formeln noch weiter verwendet. In der Anwendung müssen jedoch die oben beschriebenen, diskreten Ubersetzungen verwendet werden.

2D-Verallgemeinerung

Die zweidimensionale (2D)-Verallgemeinerung ist auch in der oben genannten Veröffentlichung, Generic neighbourhood operators, 1992, beschrieben. Es gibt drei unterschiedliche Repräsentationen im Zweidimensionalen, von denen jede ihre eigenen besonderen Eigenschaften aufweist. All diese Darstellungen können ineinander durch einfache unitäre algebraische Transformationen überführt werden. Das kann durch Betrachten der Tatsache, daß die Eigenfunktionen des harmonischen Oszillators einen Hilbert-Raum aufspannen, in dem jedes orthonormale Koordinatensystem in ein anderes durch Rotation überführbar ist, auf einfache Weise nachvollzogen werden.

1. Die kartesisch separable Repräsentation ist die interessanteste im Hinblick auf die Berechenbarkeit, weil die Anwendung des 2D-Operators in die Anwendung zweier eindimensionaler (1D)-Operatoren zerlegbar ist:

$$C_{pq}\,(x, y, s) = \Psi_p(x, s) * \Psi_q(y, s)$$

Die unterschiedlichen Operatoren sind in Familien des gleichen Grades n = p + q angeordnet. Diese sind in Figur 3 gezeigt.

Bei Betrachtung einer diskreten Filtermaske der effektiven Größe von 20 Pixeln, wird durch das Zerlegen eine Effizienz-Steigerung um den Faktor 10 (20+20 anstelle 20∗20 Elementaroperationen) erreicht.

2. Die polar separable Repräsentation ist die am besten geeignete Repräsentation für Skalierungs- oder Rotations-Transformationen, weil die Skala nur die radiale Komponente betrifft, während Änderungen in der Orientierung nur die Winkelkomponenten betreffen.

3. Die sogenannte Wellenzugs-Repräsentation ist die am besten geeignete für die Anwendung bei der Fingerabdruck-Analyse. Die Mitglieder einer Familie sind nur gedrehte Versionen der geglätteten 1D-Richtungs-Ableitung. Im Gegensatz zu den beiden anderen Repräsentationen sind die einzelnen Mitglieder nicht gewichtete, orthonormale Basisfunktionen. Die ausschlaggebende Eigenschaft ist, daß für eine gegebene Ordnung n die Überlagerung eines Satzes von n+1 vorgegebenen Filteroperationen ausreicht, um ein Richtungsfilter zu erzeugen, das beliebige Richtungen ausfiltert. Dieses Phänomen wird in "Steerable filters for image analysis", W.T. Freeman and E.H. Adelson, Technical Report 126, MIT Media Lab., 1990, als Steuerbarkeit solcher Filter bezeichnet. Die Steuerbarkeit kann durch ein Additionstheorem von Hermite-Polynomen bewiesen werden. Die Wellenzug-Repräsentation weist große Ähnlichkeiten auf zu

a) Gabor-Filtern, die beim Stand der Technik der Bildverarbeitung verwendet werden, und
b) der Antwortfunktion der richtungssensitiven Zellen im Gehirn höherer Säugetiere.

Die zugehörigen Wellenzug-Funktionen sind in Figur 4 gezeigt. Man erkennt in der Figur den richtungsspezifischen Charakter der Wellenzugs-Funktionen.

Die Übersetzung der kontinuierlichen 2D-Theorie in den diskreten Raum erfordert einige Betrachtungen. Während das Skalierungsverhalten der resultierenden Basisfunktionen direkt aus der entsprechenden (kontinuierlichen) Gaußglocke und (diskreten) Binomen folgt, kann die Steuerbarkeit nur approximiert werden. Unter der realistischen Annahme, daß bei einer ausreichend feinen Rasterung die Abweichungen zwischen der kontinuierlichen Funktion und der diskreten Annäherung vernachlässigbar wird, sind die Rotations-Koeffizienten, die im kontinuierlichen Bereich verwendet werden, auch im diskreten Bereich optimal geeignet. Es leuchtet ein, daß nicht vergessen werden darf, daß die Annäherung einer beliebig rotierten diskreten Basisfunktion verschlechtert wird, wenn eine niedrigere binomische Ordnung vorliegt, denn die Zahl der Rasterpunkte ist gerade um 1 größer als die binomische Ordnung. Für praktische Anwendungen sollte der Unterschied zwischen der binomischen Ordnung und der Ordnung der maximal angewandten Ableitung mindestens 3 bis 4 sein, um eine annehmbar gute Steuerbarkeit zu erreichen und um sogenannte "Aliasing-Effekte" auszuschließen. Das garantiert auch die erforderliche Bandbegrenzung, die zur Vermeidung von Modellierungsrauschen erforderlich ist.

Zur Verwendung bei der Fingerabdrucksanalyse sind die Wellenzüge vierter oder fünfter Ordnung sehr gut als lokale Modelle der Linien/Tal-Struktur geeignet, da sie bei der Modellierung noch die beiden Nachbarlinien berücksichtigen.

Bestimmung der optimalen Orientierung und der Größenskala

Auf Grundlage einer Wellenzugsbasis bestimmter Ordnung in einer bestimmten Größenskala erwartet man, daß die absolute Antwort stärker ausfällt, wenn die Wellenzugsmodelle optimal mit der Linien/Tal-Struktur eines Fingerabdrucks übereinstimmen. Bei der Messung der tatsächlichen Winkelantwort einer kontinuierlich rotierten Wellenzugs-Basisfunktion von beispielsweise viertem Grad, die bei einer relativ guten Linien/Tal-Struktur angewandt wird, folgt die Antwort in etwa einer Kosinus- oder Sinusfunktion. Deshalb sind die Quadrate der Wellenzugs-Basis-Antwort-Funktionen auf diese Kosinus- und Sinusbasis mit einer Periode von 180° projiziert, um die optimale lokale Ausrichtung zu bestimmen, was zu einem Richtungsfeld führt, dessen Arcus die lokale Orientierung angibt. Auf Grund der Tatsache, daß sich die lokale Ausrichtung in den Bildern meist kontinuierlich (und allmählich) ändert, kann und sollte das resultierende Richtungsfeld stark geglättet werden.

Die Bestimmung der optimalen Größenskala ist auf ähnlich einfache Weise möglich. Sie erfordert, das Bild mit einem bestimmten Satz von Filtern in allen möglicherweise relevanten Größenskalen zu filtern. Die optimale Größenskala ergibt sich als diejenige, deren Filter das betragsmäßig größte Signal liefert. Bei Verwendung weniger Filter bei festen Skalen wird das Ergebnis geeignet interpoliert.

Die Qualitätsmessung

Die Qualitätsmessung kann am besten mit den kartesischen Basisfunktionen im 2D-Bereich erklärt werden. Die Multiplikationseigenschaften, die oben für den Bildoperator $\Psi$ dargestellt wurden, sind für die Basisfunktion $\Phi$ gültig. Die 2D-Funktionen werden sinnvollerweise in Familien vom Grade n angeordnet, jede mit n+1 Mitgliedern, was im Folgenden mit dem Index k indiziert wird.

Auf Grund des orthonormalen Charakters der Basisfunktionen $\Phi_{k,n-k}$, wird ein lokales Teilbild nach der Basis entwickelt:

$$I(x,y) * A(x,y,s) = \sum_{n=0}^{\infty} \sum_{k=0}^{n} \gamma_{k,n-k} \Phi_{k,n-k}(x,y,s)$$

Die Koeffizienten $\gamma_{k,n-k}$ sind gegeben durch

$$\gamma_{k,n-k} = (\sqrt{4s})^{n} \iint I(x,y) C_{k,n-k}(x,y,s) dxdy$$

Nach dem Parseval-Theorem gilt:

$$\iint \left(I(x,y) * A(x,y,s)\right)^2 dxdy = \sum_{n=0}^{\infty} \sum_{k=0}^{n} \gamma_{k,n-k}^2$$

Bei diskreten Koordinaten x und y wird aus dem unendlich dimensionalen Hilbertraum ein endlich dimensionaler linearer Vektorraum. Es gibt also auch nur endlich viele Koeffizienten $\gamma_{k,n-k}$. Deren maximale Anzahl ist die Zahl der vorkommenden Datenpunkte innerhalb des durch A(x,y,s) definierten Fensters.

Der Koeffizient $\gamma_{0,0}^2$, der den Mittelwert repräsentiert, hat eine spezielle Rolle: Er wird im Parseval-Theorem häufig auf beiden Seiten der Gleichung subtrahiert, wodurch sich ergibt, daß die Varianz gleich der Summe der quadrierten Koeffizienten außer dem 0-ten ist. Wenn nur eine Teilmenge S von Koeffizienten als Näherungswert benutzt wird, ergibt ihre Summe in Bezug auf die Varianz einen punktweise definierten Wert, der als objektives Qualitätsmaß Q im Sinne der vom Modell erklärten Varianz benutzt wird.

$$Q = \frac{\sum_{(k,n) \in S} \gamma_{k,n-k}^2}{\left(\iint \left(I(x,y) * A(x,y,s)\right)^2 dxdy\right) - \gamma_{0,0}^2}$$

Bei dem oben diskutierten Fingerabdrucksmodell wird nur ein einzelner Koeffizient vierten Grades mit der optimalen Größenskala und der optimalen Richtung als lokales Bildmodell genutzt. Der quadrierte Wert dieses einzelnen Koeffizienten wird als lokales Qualitätsmaß genutzt. Gewöhnlich ist dieses Qualitätsmaß weit kleiner als der maximale Wert von 1, weil sogar im Idealfall, in dem parallele Linien vorliegen, die Modellstruktur mit zunehmendem Abstand vom Zentrum abnimmt, während das ideale Bild periodisch ist. Ein Qualitätsmaß von 0,3 wird bereits als ausgezeichnet betrachtet. Andererseits wird auf ein vollkommen zufälliges Signal keiner der Koeffizienten mit den oben beschriebenen Eigenschaften das Qualitätsmaß von 0,15 überschreiten. Deshalb ist ein Schwellwert von 0,16 bis 0,17 ein gute untere Grenze für die Hypothese, daß ein brauchbares Signal vorliegt.

Die typischen lokalen Merkmale eines Fingerabdrucks, die Linienenden und Verzweigungen, ergeben lokale Minima des Qualitätsmaßes, weil es lokale Fehler des Modells sind. Deshalb ist zur Beschreibung der Qualität dieser Minuzien (MI) ein Durchschnittswert aus deren Nachbarschaft zu verwenden.

Ein ähnliches Problem tritt bei den globalen Singularitäten (SI) des Fingerabdrucks auf. Per Definition liegt in diesen Punkten keine bestimmbare Vorzugsrichtung vor. Deshalb wird das Qualitätsmaß eines starren 1D-Modells an diesen Stellen zwangsweise verschwinden. Qualität ist jedoch keine punktweise, sondern eine regionale Eigenschaft. Deshalb wird das Qualitätsmaß für eine Umgebung geeigneter Größe ermittelt. Das hat auch den Effekt, daß an Orten, an denen besondere Fingerabdrucks-Merkmale vorliegen, kein Rückgang des Qualitätsmaßes vorliegt, obwohl sie das Idealmodell stören.

Anhand der Figuren 2 und 5 bis 15 wird der Gesamtalgorithmus nun genauer beschrieben. Die beschriebenen Konzepte sind das Herzstück zur Lösung der Probleme, die mit dem Kodieren von Fingerabdrücken einhergehen, deren Kode in einer automatisch aufgebauten Datenbasis verwendet werden soll. Dies beinhaltet einige einteilbare Schritte:

- Vorverarbeitung für eine globale Grauwert und Kontrastkorrektur.
- Bestimmung der Vorzugsrichtung in der näheren Umgebung jedes Pixels des Bildes.
- Segmentierung z.B. durch Markierung von für die Identifikation relevanten Bereichen.
- Identifikation von Singularitäten (SI) im Richtungsfeld.
- Bestimmung globaler Charakteristika zur Klassifikation.
- Ermitteln und Verdichten von Minuzien (MI) aus dem gefilterten Bild.

Nachfolgend sind diese Schritte im Detail diskutiert und unter Anwendung der oben diskutierten modellbasierten Filterung erläutert.

Vorverarbeitung

Ein Fingerabdruck wird von einem Scanner in Grauwerte digitalisiert, die ein typisches, originales Abbild des Fingerabdrucks, wie in Figur 5 gezeigt, ergeben. Ein solches originales Abbild weist große Unterschiede in Helligkeit und Kontrast auf. Diese Unterschiede werden zum Zweck einer optimierten Weiterverarbeitung ausgeglichen. Dazu wird zunächst ein regionaler Mittelwert bestimmt und vom Originalbild abgezogen. Das sich ergebende mittelwertfreie Bild hat noch alle Kontrastunterschiede. Diese werden durch eine pseudologarithmische Transformation, wie sie aus "The pseudo-logarithmic transformation for robust displacement estimation", J. Dengler and M. Schmidt, R.E. Großkopf, editor, Mustererkennung 1990, Informatik Fachberichte 254, Seiten 275 -- 281, Berlin-Heidelberg-New - York-Tokio, 1990. Springer bekannt ist, auf ähnlichem Weg wie beim menschlichen Auge bestimmt. Das Ergebnis beider Vorverarbeitungsschritte ist in Figur 6 gezeigt. Es liefert einen optimalen Ausgangspunkt für eine weitere Analyse, denn es bleiben alle lokalen Kontraste erhalten und die schwachen Kontraste werden deutlich verstärkt.

Identifikation der Vorzugsrichtung in jedem Pixel

Für viele Gesichtspunkte der Fingerabdrucksanalyse ist die Bestimmung der lokalen Vorzugsrichtung, die zur Richtung der lokalen Linien/Tal-Struktur korrespondiert, von großer Wichtigkeit.

Zunächst wird ein Pixel des vorverarbeiteten Grauwertbildes einschließlich der das ausgewählte Pixel umgebenden Pixel als Bildausschnitt ausgewählt. Der zweidimensionale Bildausschnitt umfaßt in der Regel einen Bereich von 20 * 20 Pixeln.

Der ausgewählte Bildausschnitt wird mittels der zweidimensionalen Binomialfunktion A(x,s) definiert und gewichtet.

Diese gewichtete Bildfunktion wird wie oben beschrieben nach einer diskreten Approximation der orthonormalen kartesischen Eigenfunktionen $\Phi_n(\xi)$ des quantenmechanischen HarmonischenOszillators entwickelt. Dabei wird aus den oben genannten Gründen nur die Familie 4. Ordnung verwendet. Der Verzicht auf die übrigen, weniger entscheidenden Koeffizienten erfolgt auch aus Effizienzgründen.

Die algebraische Rotation der Entwicklungskoeffizienten geschieht mit Hilfe des Rotationstheorems für Hermite-Polynome. Dadurch werden die kartesischen Koeffizienten in Koeffizienten der Wellenzugsbasis WB, wie sie in Figur 4 dargestellt sind, überführt. Das Betragsquadrat dieser Koeffizienten repräsentiert den Grad der Anpassung jedes der in Figur 4 gezeigten Modelle der Wellenzugsbasis WB an den Bildausschnitt. Der Koeffizient mit dem höchsten Betrag gibt die am besten passende Wellenzugsbasis WB an. Aus dieser Wellenzugsbasis WB wird mittels Glättung und Anpassung der Koeffizientenbeträge an periodische Funktionen eine Vektorfeldapproximation der Vorzugsrichtung vorgenommen. Aus dieser Annäherung werden der Winkel bester Orientierung und die Anpassungsgüte bestimmt. Der sich ergebende aus zwei Komponenten bestehende Vektorkoeffizient gibt mit seinem Arcus die Richtung der lokalen Linienorientierung im betrachteten Bildausschnitt und mit seinem Betrag das lokale Qualitätsmaß an.

Der Vektorkoeffizient wird in einem Speicher abgelegt und ein nächstes, beispielsweise benachbartes Pixel zur Ermittlung von dessen Vektorkoeffizienten ausgewählt. Wenn auf diese Weise die Vektorkoeffizienten aller Pixel des relevanten Bildausschnittes ermittelt sind, werden statistische Fehler der Orientierungen durch großräumige Glättung (Mittelwertbildung) stark reduziert.

Die gesamte Prozedur wird für weitere zwei Größenskalen wiederholt. Es wird für jedes Pixel durch lineare Überlagerung die am besten passende Wellenzugs-Basisfunktion und damit der Vektorkoeffizient ausgewählt, dessen Qualitätsmaß bezüglich Richtung und Linienabstand am größten ist. Die Wichtung $\omega$ der Einzelbeiträge ergibt sich aus den jeweiligen Qualitäten $q_i$:

$$\omega_i = \frac{q_i}{\sum_i q_i}$$

Ein Feld mit den optimalen Skalen kann als Feld in einem Speicher MEM1 hinterlegt werden. Mit Hilfe dieses Skalenfeldes können später die Informationen über den mittleren Linienabstand eines Fingerabdrucks weiterverwertet werden.

Bei Verwendung eines Satzes von Basisfunktionen vierter Ordnung in drei unterschiedlichen Größenskalen, die den möglichen Bereich von Abständen zwischen den Linien abdecken, ergeben die Projektionen der Operatorantworten auf die Kosinus-und Sinuskomponenten das in Figur 9 in Grauwerte kodierte Feld von Richtungsvektoren. Es

ist klar, daß es sich dabei um ein Vektorfeld mit einem Bereich von 180° handelt, was bedeutet, daß eine Drehung von 180° keine Auswirkung auf irgendeine der Komponenten hat. Der Arcus dieses Vektorfeldes gibt die tatsächliche Richtung an, wie er durch Grauwertkodierung des Winkels in Figur 10 dargestellt ist. Es ist zu beachten, daß weiß und schwarz den gleichen Winkel von 0° repräsentieren. Das Richtungsfeld, das in einem Speicher abgelegt wird, ist die wichtigste Informationsquelle für die globale Charakterisierung des Fingerabdrucks.

Aus dem Betrag der Richtungsvektoren wird eine Qualitätskarte gebildet, die als Grauwertbild in Figur 7 gezeigt ist und in einem Speicher abgelegt wird. Anhand dieser Qualitätskarte können verschiedene, zur Klassifikation hilfreiche Erkenntnisse über das Abbild der Fingerabdrucks gewonnen werden.

Eine wichtige Aufgabe bei der Identifikation eines reellen Fingerabdrucks ist die Trennung des tatsächlichen Fingerabdrucks von dessen Umgebung. Mit Hilfe einer Schwellwertbehandlung der Qualitätskarte kann der relevante Bildbereich ermittelt werden. Als Schwellwert wird die maximale zufällige Qualität von 0,15 benutzt, d.h. ist der Betrag der Qualität größer als 0,15, dann liegt bei dem betrachteten Pixel eine Struktur vor, die auf das Vorhandensein eines Fingerabdrucks schließen läßt. Als Ergebnis dieser Schwellwertbehandlung ergibt sich eine Segmentationskarte, wie sie in Figur 8 gezeigt ist.

Da die Qualitätskarte geglättet ist, ist der Bereich guter Qualität zusammenhängend oder weist zumindest große zusammenhängende Bereiche auf. Man kann erkennen, daß die Segmentation ähnlich der menschlichen Intuition wirkt.

Das Richtungsbild wird mit dem Segmentierungsergebnis maskiert, um bei der weiteren Verarbeitung störende Eigenschaften, wie z.B. Hintergrundrauschen zu vermeiden.

Bestimmung von Singularitäten (SI) aus dem Richtungsfeld

Es gibt zwei unterschiedliche Arten bemerkenswerter Punkte im Richtungsfeld. Diese auch Singularitäten (SI) genannten, speziellen Punkte haben keine gut definierte Richtung. Die Singularitäten (SI) können durch das normierte Integral der Winkeländerung des Umgebungsfeldes charakterisiert werden, das als topologische Ladung interpretierbar ist. Es kommt der Satz über Umlaufzahlen aus der Funktionentheorie zur Anwendung, wie er beispielsweise in "Analysing Oriented Patterns", M.Kass, A.Witkin, Computer Vision, Graphics and Image Processing, Seiten 362.. 385, 1987, beschrieben ist. Die wichtigsten Singularitäten (SI) sind die Kernbereiche mit einer Umlaufzahl 0,5 mit positivem Vorzeichen und die Deltabereiche mit Umlaufzahl 0,5 mit negativem Vorzeichen. Figur 11 zeigt die automatisch bestimmten Singularitäten SI im Originalbild des Fingerabdrucks.

In Bereichen undefinierter Ausrichtung können irrtümlich falsche Singularitäten SI ermittelt werden. Diese werden durch einen statistischen Test bei jeder Singularität SI eliminiert. Um zu einem positiven Testergebnis zu gelangen, muß ausreichend viel richtungsspezifische Information in einer näheren Umgebung einer vermeintlichen Singularität SI vorhanden sein. Die Art der Singularitäten SI, ihre Koordinaten und Abstände zueinander werden in einem Speicher MEM1 abgelegt. Man bedient sich bei der Angabe des Abstandes der Längeneinheit "Linienzahl" (ridgecount), die die Anzahl der Linien zwischen den Singularitäten SI angibt.

Eine Kernkategorie, die Bogenkerne, korrespondiert nicht wirklich mit den Singularitäten SI im Richtungsfeld. Sie sind durch eine Art Erhebung charakterisiert. Solche Singularitäten SI werden durch eine spezielle Prozedur behandelt. Bei dieser Prozedur wird anhand des Richtungsfeldes und der Qualitätskarte ein Bogenkern an den Stellen gesetzt, an denen ein Maximum der Linienkrümmungen vorliegt und eine gute Rechts-/Linkssymmetrie besteht.

Modellbasierte Rekonstruktion

Ein zentraler Ausgangspunkt der sicheren Analyse von Fingerabdruck-Bildinformationen ist der Filterungsprozeß, der erforderlich ist, um falsche Merkmale auszuschließen und um die richtigen herauszufinden. Die Annäherung dazu ist modellbasiert: Das Bild wird tatsächlich rekonstruiert durch lineare Superposition der am besten passenden Wellenzugs-Basisfunktion vierter Ordnung. Das Ergebnis ist eine idealisierte Rekonstruktion der Linien/Tal-Struktur, wie sie in Figur 12 gezeigt wird. Gut rekonstruierte Bereiche zeigen starken Kontrast, während bei weniger gut rekonstruierten Bereichen schwächerer Kontrast vorliegt.

Merkmalsextraktion

Ziel und Zweck der Fingerabdrucksanalyse ist es, eine verläßliche Extraktion von Minuzien MI zu erreichen. Diese unveränderlichen Linienenden und Verzweigungen sind von zentraler Bedeutung bei der Identifizierung einer Person.

Ausgehend von der oben beschriebenen modellbasierten Rekonstruktion ist der Rest des Verfahrens trivial. Zurückzuführen auf die Tatsache, daß alle Operatoren erster und höherer Ordnung ein arithmetisches Mittel von Null aufweisen, ist der optimale Schwellwert zur Schaffung eines Binärbildes die Null. Beispielsweise wird bei Funktionswerten des Rekonstruktionsbildes größer Null Weiß gesetzt und bei Funktionswerten kleiner Null Schwarz gesetzt. Die maskierte binäre Rekonstruktion gemäß Figur 13 zeigt die ausgezeichnete Qualität des dargestellten Verfahrens.

Skelettierung

Es ist beispielsweise aus "Morphologische Bildverarbeitung in der Zellenanalyse", M.Schmidt, Technical Report 9-2/88, Deutsches Krebsforschungszentrum Heidelberg/DE, Medizinische und Biologische Informatik, 1988, eine anwendbare Methode zur Skelettierung bekannt. Ziel der Skelettierung ist es, ein Pixel breite Linien, wie in Figur 14 gezeigt, zu erzeugen. Dazu wird die Linienbreite schrittweise auf die Breite eines Pixels verringert, ohne den topologischen Zusammenhang zu verändern.

Aus dem skelettierten Binärbild lassen sich auf einfache Weise Linienenden und Verzweigungen durch eine einfache 3x3 Pixelmuster-Vergleichsmethode (template matching) bestimmen. Aufgrund des Skelettierungsverfahrens entstandene kurze Linienstücke mit Enden werden nachträglich beseitigt. Die als Minuzien MI bezeichneten Fingerabdrucksmerkmale werden in Form einer Liste von Koordinaten, Richtung, Typ und Qualität gespeichert.

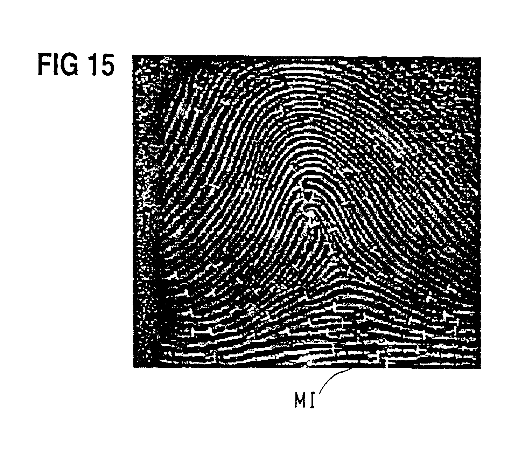

Als Ergebnis des Kodierungsverfahrens stehen umfangreiche Informationen zum Fingerabdruck zur Verfügung. Dieses Ergebnis ist unter Kennzeichnung der globalen Singularitäten SI und der Minuzien MI in Figur 15 dargestellt. Die durch das Bild dargestellten Informationen werden in einer hier nicht dargelegten Art und Weise für den Vergleicher MT geordnet und aufbereitet und in den Speichern MEM, MEM1 abgelegt.

**Patentansprüche**

**1.** Verfahren zur Rekonstruktion von in Rasterform vorliegenden Linienstrukturen, insbesondere für Fingerabdrücke, mit folgenden Schritten,

a) Auswahl eines um ein Pixel angeordneten Bildausschnitts aus einem in Pixelform vorliegenden, in Grauwerten, digitalisierten Bild einer Linienstruktur,
b) lokales Nachbilden der Grauwertinformation durch eine eindimensiondale Basisfunktion $\Psi_n(x,s)$, die mit einer zweidimensionalen, den Bildausschnitt definierenden und gewichtenden Binomialfunktion $A(x,s)$, in Beziehung gebracht wird durch:

$$\Psi_n(x,s)=\left(\frac{1}{\sqrt{4s}}\right)^n \Phi_n(\xi)A(x,s)$$

c) Ermitteln einer für das ausgewählte Pixel in verbindung mit seiner Umgebung vorliegenden Vorzugsrichtung der den Bildpunkt durchlaufenden Linien, mittels

c)i Entwickeln der im Kontinuum formulierten Basisfunktion $\psi_n(x,s)$, die als Gauß-gewichteter Ableitungsoperator betrachtet wird, nach einer diskreten Approximation mit Hilfe von Binomen, nach der Beziehung $s = \frac{m}{2}$, wobei s der kontinuierliche Skalenparameter des Gaußkerns und m die diskrete Ordnung des Binoms ist,

c)ii Auswahl eines Entwicklungskoeffizienten einer solchen Ordnung, die eine gute Annäherung der Basisfunktion an die Grauwertinformation ermöglicht,

c)iii algebraische Rotation der Entwicklungskoeffizienten mit Hilfe des Rotationstheorems für Hermite-Polynome, sodaß kartesischen Koeffizienten in Koeffizienten einer Wellenzugsbasis WB überführt werden,

c)ivAnpassung der Koeffizientenbeträge an die periodische Funktion von Modellen einer Wellenzugsbasis (WB),

d) Ablegen des einen Vektorkoeffizienten mit zwei Komponenten enthaltenden Ergebnisses als Richtungsverteilung in einem Speicher und
e) Auswahl eines nächsten Pixels und Wiederholen der Schritte a) bis d) solange, bis die Richtungsverteilung der Pixel der Linienstruktur im Speicher abgelegt ist.

**2.** Verfahren nach Anspruch 1, bei dem eine statistische Glättung der ermittelten Vektorkoeffizienten durch Mittelwertbildung durchgeführt wird.

**3.** Verfahren nach einem der Ansprüche 1 oder 2, mit einer Wiederholung des Verfahrens mit mindestens einer zweiten Binomialfunktion A(x,s), die einer anderen die Linienabstände beschreibenden Größenskala zugeordnet ist.

**4.** Verfahren nach Anspruch 3, mit einer Auswahl der jeweils am besten passenden Basisfunktion und damit des Vektorkoeffizienten, dessen Qualitätsmaß q bezüglich Richtung und Linienabstand am größten ist und Wichtung mittels Erzeugung einer Wichtungsfunktion

$$\omega_i = \frac{q_i}{\sum_i q_i}$$

der Einzelbeiträge, wobei das jeweilige Auswahlergebnis in einem Speicher als Grauwertbild und als Richtungsverteilung abgelegt wird.

**5.** Verfahren nach einem der vorhergehenden Ansprüche, bei dem der Betrag jedes Vektorkoeffizienten gebildet und in Form einer Qualitätskarte gespeichert wird, die die Qualität der Rekonstruktion einer Linienstruktur visualisiert.

**6.** Verfahren nach Anspruch 5 mit einer Segmentierung der Rekonstruktionsergebnisses mittels Schwellwertbehandlung der Qualitätskarte, bei der alle Pixel mit einer Qualität, die größer als ein Schwellwert ist, einer gültigen Linienstuktur zugeordnet werden.

**7.** Verfahren nach einem der vorhergehenden Ansprüche mit einer Ermittlung von Singularitäten (SI) aus der gespeicherten Richtungsverteilung unter Bildung des normierten Integrals der Winkeländerung des Umgebungsfeldes.

**8.** Verfahren nach Anspruch 7 mit einer Überprüfung vorhandener Vektorkoeffizienten in der Umgebung einer Singularität (SI) und Speicherung der Daten zum Auffinden einer als echt erkannten Singularität (SI).

**9.** Verfahren nach einem der vorhergehenden Ansprüche mit einer Rekonstruktion aller Pixel aus dem Grauwertbild zu einem Binärbild, indem der Grenzwert für eine Unterscheidung zwischen Weiß und Schwarz bei dem Grauwert 0 gesetzt wird.

**10.** Verfahren nach Anspruch 8 mit einer Skelettierung des Binärbildes, sodaß die Linienbreite schrittweise auf die Breite eines Pixels verringert wird.

**11.** Verfahren nach Anspruch 10 mit

- einer aufeinanderfolgenden Auswahl jeweils 3x3 großer Pixelbildausschnitte aus dem skelettierten Binärbild,
- einem Vergleich dieser Pixelbildausschnitte mit gleich großen Pixelmustern, die Verzweigungen oder Linienenden beinhalten und
- einer Speicherung der Bildpunktkoordinaten bei positivem Vergleichsergebnis.

**12.** Verfahren nach Anspruch 11 mit einer Bewertung der Zuverlässigkeit einer gefundenen Minuzie (MI) anhand der in der Qualitätskarte gespeicherten Qualitätsmaße in der Umgebung jeder Minuzie (MI).

**13.** Vorrichtung zur Rekonstruktion von in Rasterform vorliegenden Linienstrukturen, insbesondere für Fingerabdrükke, mit folgenden Mitteln:

a) - Mittel zur Auswahl eines um ein Pixel angeordneten Bildausschnitts aus einem in Pixelform vorliegenden, in Grauwerten, digitalisierten Bild einer Linienstruktur,
b) - Mittel lokalen Nachbilden der Grauwertinformation durch eine eindimensiondale Basisfunktion $\Psi_n(x,s)$, die mit einer zweidimensionalen, den Bildausschnitt definierenden und gewichtenden Binomialfunktion $A(x, s)$, in Beziehung gebracht ist durch:

$$\Psi_n(x,s)=\left(\frac{1}{\sqrt{4s}}\right)^n \Phi_n(\xi)A(x,s)$$

c) Mittel zum Ermitteln einer für das ausgewählte Pixel in Verbindung mit seiner Umgebung vorliegenden Vorzugsrichtung der den Bildpunkt durchlaufenden Linien, mittels

c)i Entwickeln der im Kontinuum formulierten Basisfunktion $\Psi_n(x,s)$, die als Gauß-gewichteter Ableitungsoperator betrachtet wird, nach einer diskreten Approximation mit Hilfe von Binomen, nach der Beziehung $s = \frac{m}{2}$, wobei s der kontinuierliche Skalenparameter des Gaußkerns und m die diskrete Ordnung des Binoms ist,

c)ii Auswahl eines Entwicklungskoeffizienten einer solchen Ordnung, die eine gute Annäherung der Basisfunktion an die Grauwertinformation ermöglicht,

c)iii algebraische Rotation der Entwicklungskoeffizienten mit Hilfe des Rotationstheorems für Hermite-Polynome, sodaß kartesischen Koeffizienten in Koeffizienten einer Wellenzugsbasis WB überführt werden,

c)iv Anpassung der Koeffizientenbeträge an die periodische Funktion von Modellen einer Wellenzugsbasis (WB),

d) Mittel zum Ablegen des einen Vektorkoeffizienten mit zwei Komponenten enthaltenden Ergebnisses als Richtungsverteilung in einem Speicher und

e) Mittel zur Auswahl eines nächsten Pixels und zum Wiederholen der Schritte a) bis d) solange, bis die Richtungsverteilung der Pixel der Linienstruktur im Speicher abgelegt ist.

**14.** Vorrichtung nach Anspruch 13, mit Mitteln zur statistischen Glättung der ermittelten Vektorkoeffizienten durch Mittelwertbildung.

**15.** Vorrichtung nach einem der Ansprüche 13 oder 14, mit einem Mittel zur Wiederholung des Verfahrens mit mindestens einer zweiten Binomialfunktion $A(x,s)$, die einer anderen die Linienabstände beschreibenden Größenskala zugeordnet ist.

**16.** Vorrichtung nach Anspruch 15, mit einem Mittel zur Auswahl der jeweils am besten passenden Basisfunktion und damit des Vektorkoeffizienten, dessen Qualitätsmaß q bezüglich Richtung und Linienabstand am größten ist und Wichtung mittels Erzeugung einer Wichtungsfunktion

$$\omega_i = \frac{q_i}{\sum_i q_i}$$

der Einzelbeiträge, wobei das jeweilige Auswahlergebnis in einem Speicher als Grauwertbild und als Richtungsverteilung abgelegt ist.

**17.** Vorrichtung nach einem der vorhergehenden Ansprüche 13 bis 16, bei dem Mittel zur Bildung des Betrags jedes Vektorkoeffizienten und Speicherung in Form einer Qualitätskarte vorgesehen sind, wobei die Qualitätskarte die Qualität der Rekonstruktion einer Linienstruktur visualisiert.

**18.** Vorrichtung nach Anspruch 17 mit einem Mittel zur Segmentierung der Rekonstruktionsergebnisses mittels Schwellwertbehandlung der Qualitätskarte, bei der alle Pixel mit einer Qualität, die größer als ein Schwellwert ist, einer gültigen Linienstuktur zugeordnet werden.

**19.** Vorrichtung nach einem der vorhergehenden Ansprüche 13 bis 18 mit einem Mittel zur Ermittlung von Singularitäten (SI) aus der gespeicherten Richtungsverteilung unter Bildung des normierten Integrals der Winkeländerung des Umgebungsfeldes.

**20.** Vorrichtung nach Anspruch 19 mit einem Mittel zur Überprüfung vorhandener Vektorkoeffizienten in der Umgebung einer Singularität (SI) und Speicherung der Daten zum Auffinden einer als echt erkannten Singularität (SI).

**21.** Vorrichtung nach einem der vorhergehenden Ansprüche 13 bis 20 mit einem Mittel zur Rekonstruktion aller Pixel aus dem Grauwertbild zu einem Binärbild, indem der Grenzwert für eine Unterscheidung zwischen Weiß und Schwarz bei dem Grauwert 0 gesetzt wird.

**22.** Vorrichtung nach Anspruch 20 mit einem Mittel zur Skelettierung des Binärbildes, sodaß die Linienbreite schrittweise auf die Breite eines Pixels verringert wird.

**23.** Vorrichtung nach Anspruch 22 mit einem Mittel zu

- einer aufeinanderfolgenden Auswahl jeweils 3x3 großer Pixelbildausschnitte aus dem skelettierten Binärbild,
- einem Vergleich dieser Pixelbildausschnitte mit gleich großen Pixelmustern, die Verzweigungen oder Linienenden beinhalten und
- einer Speicherung der Bildpunktkoordinaten bei positivem Vergleichsergebnis.

**24.** Vorrichtung nach Anspruch 23 mit einem Mittel zur Bewertung der Zuverlässigkeit einer gefundenen Minuzie (MI) anhand der in der Qualitätskarte gespeicherten Qualitätsmaße in der Umgebung jeder Minuzie (MI).

## Claims

**1.** Method for reconstructing linear structures present in raster form, in particular for fingerprints, having the following steps,

a) selecting an image section, arranged around a pixel, from a linear-structure image which is present in pixel form and digitized in terms of grey-scale values,
b) local simulation of the grey-scale information by means of a one-dimensional basic function $\Psi_n(x,s)$, which is related to a two-dimensional weighted binomial function *A(x,s)*, which defines the image section, by means of:

$$\Psi_n(x,s)=\left(\frac{1}{\sqrt{4s}}\right)^n \Phi_n(\xi)A(x,s)$$

c) determining a preferred direction, present for the selected pixel in conjunction with its environment, of the lines running through the pixel, by means of

c)i expanding the basic function $\Psi_n(x,s)$, which is formulated in the continuum and is regarded as a Gaussian-weighted derivative operator, in accordance with a discrete approximation with the aid of binomials in accordance with the relationship $s=\frac{m}{2}$, s being the continuous scale parameter of the Gaussian core and m being the descrete order of the binomial,
c)ii selecting an expansion coefficient of an order which permits a good approximation of the basic function to the grey-scale information,
c)iii algebraically rotating the expansion coefficients with the aid of the rotation theorum for Hermite polynomials, with the result that Cartesian coefficients are transformed into coefficients of a wavetrain base WB,
c)iv adapting the absolute values of the coefficients to the periodic function of models of a wavetrain base (WB),

d) storing the result which contains a vector coefficient with two components at a directional distribution, and
e) selecting a next pixel and repeating steps a) to d) until the directional distribution of the pixels of the linear structure is stored in the memory.

**2.** Method according to Claim 1, in which statistical smoothing of the vector coefficients determined is carried out by averaging.

**3.** Method according to one of Claims 1 or 2, with repetition of the method by means of at least a second binomial function *A(x,s)* which is assigned to a different magnitude scale which describes the linear spacings.

**4.** Method according to Claim 3, with selection of the best-fitting basic function, and thus of the vector coefficient whose measure of quality q with regard to direction and linear spacing is the greatest, and weighting by means of generating a weighting function

$$\omega_i = \frac{qi}{\sum_i qi}$$

of the individual contributions, the respective selection result being stored in a memory as a grey-scale image and as a directional distribution.

**5.** Method according to one of the preceding claims, in which the absolute value of each vector coefficient is formed and is stored in the form of a quality map which visualises the quality of the reconstruction of a linear structure.

**6.** Method according to Claim 5, with segmentation of the reconstruction result by means of threshold-value treatment of the quality map, in which all the pixels having a quality which is higher than a threshold value are assigned to a valid linear structure.

**7.** Method according to one of the preceding claims, with determination of singularities (SI) from the stored directional distribution, accompanied by the formation of the standardized integral of the angular variation in the environmental field.

**8.** Method according to Claim 7, with checking of existing vector coefficients in the environment of a singularity (SI) and storage of the data for finding a singularity (SI) recognized as authentic.

**9.** Method according to one of the preceding claims, with reconstruction of all the pixels from the grey-scale image to form a binary image by setting the limiting value for distinguishing between white and black at the grey-scale value of 0.

**10.** Method according to Claim 8, with outlining of the binary image so that the line width is reduced in steps to the width of a pixel.

**11.** Method according to Claim 10, with

- sequential selection of pixel image sections, of size 3 × 3 pixels each, from the outlined binary image,
- comparison of these pixel image sections with pixel patterns of the same size which contain branchings or line ends, and
- storage of the image point coordinates in the event of a positive result of comparison.

**12.** Method according to Claim 11, with evaluation of the reliability of a found minutia (MI) with the aid of the quality measures, stored in the quality map, in the environment of each minutia (MI).

**13.** Device for reconstructing linear structures present in raster form, in particular for fingerprints, using the following means:

a) means for selecting an image section, arranged around a pixel, from a linear-structure image which is present in pixel form and digitized in terms of grey-scale values,
b) means for local simulation of the grey-scale information by means of a one-dimensional basic function $\Psi_n(x,s)$, which is related to a two-dimensional weighted binomial function $A(x,s)$, which defines the image section, by means of:

$$\Psi_n(x,s) = \left(\frac{1}{\sqrt{4s}}\right)^n \Phi_n(\xi) A(x,s)$$

c) means for determining a preferred direction, present for the selected pixel in conjunction with its environment, of the lines running through the pixel, by means of

c)i expanding the basic function $\Psi_n(x,s)$, which is formulated in the continuum and is regarded as a Gaussian-weighted derivative operator, in accordance with a discrete approximation with the aid of binomials in accordance with the relationship $s=\frac{m}{2}$, s being the continuous scale parameter of the Gaussian core and m being the descrete order of the binomial,
c)ii selecting an expansion coefficient of an order which permits a good approximation of the basic function to the grey-scale information,
c)iii algebraically rotating the expansion coefficients with the aid of the rotation theorum for Hermite polynomials, with the result that Cartesian coefficients are transformed into coefficients of a wavetrain base WB,
c)iv adapting the absolute values of the coefficients to the periodic function of models of a wavetrain base (WB),

d) means for storing the result which contains a vector coefficient with two components as directional distribution in a memory, and
e) means for selecting a next pixel and repeating steps a) to d) until the directional distribution of the pixels of the linear structure is stored in the memory.

**14.** Device according to Claim 13, with means for statistical smoothing of the vector coefficients determined by averaging.

**15.** Device according to one of Claims 13 or 14, with a means for the repetition of the method by means of at least a second binomial function *A(x,s)* which is assigned to a different magnitude scale which describes the linear spacings.

**16.** Device according to Claim 15, with a means for selecting the best-fitting basic function, and thus of the vector coefficient whose measure of quality q with regard to direction and linear spacing is the greatest, and weighting by means of generating a weighting function

$$\omega_i = \frac{qi}{\sum_i qi}$$

of the individual contributions, the respective selection result being stored in a memory as a grey-scale image and as a directional distribution.

**17.** Device according to one of the preceding Claims 13 to 16, in which means are provided for forming the absolute value of each vector coefficient and storing it in the form of a quality map, the quality map visualizing the quality of the reconstruction of a linear structure.

**18.** Device according to Claim 17, with a means for the segmentation of the reconstruction result by means of threshold-value treatment of the quality map, in which all the pixels having a quality which is higher than a threshold value are assigned to a valid linear structure.

**19.** Device according to one of the preceding Claims 13 to 18, with a means for determining singularities (SI) from the stored directional distribution, accompanied by the formation of the standardized integral of the angular variation in the environmental field.

**20.** Device according to Claim 19, with a means for checking of existing vector coefficients in the environment of a singularity (SI) and storage of the data for finding a singularity (SI) recognized as authentic.

**21.** Device according to one of the preceding Claims 13 to 20, with a means for reconstruction of all the pixels from the grey-scale image to form a binary image by setting the limiting value for distinguishing between white and black at the grey-scale value of 0.

**22.** Device according to Claim 20, with a means for outlining of the binary image so that the line width is reduced in steps to the width of a pixel.

**23.** Device according to Claim 22, with a means for

- sequential selection of pixel image sections, of size 3 3 pixels each, from the outlined binary image,
- comparison of these pixel image sections with pixel patterns of the same size which contain branchings or line ends, and
- storage of the image point coordinates in the event of a positive result of comparison.

**24.** Device according to Claim 23, with a means for the evaluation of the reliability of a found minutia (MI) with the aid of the quality measures, stored in the quality map, in the environment of each minutia (MI).

## Revendications

**1.** Procédé pour la reconstruction de structures de lignes présentes sous forme de trames, notamment d'empreintes digitales, comportant les étapes suivantes :

a) sélection d'un extrait d'image disposé autour d'un pixel à partir d'une image d'une structure de lignes présente sous forme de pixels et numérisée en valeurs de gris,
b) imitation locale de l'information en valeurs de gris par une fonction de base unidimensionnelle $\Psi_n(x, s)$ qui est mise en relation avec une fonction binomiale A(x, s) bidimensionnelle, définissant l'extrait d'image et pondérée, selon :

$$\Psi_n(x, s) = \left(\frac{1}{\sqrt{4s}}\right)^n \Phi_n(\xi)A(x, s)$$

c) détermination d'une orientation préférée, existant pour le pixel sélectionné en relation avec son environnement, des lignes traversant le point d'image, au moyen des opérations suivantes :

c)i développement de la fonction de base formulée dans le domaine continu $\Psi_n(x, s)$, qui est considérée comme un opérateur de dérivation à pondération de Gauss, suivant une approximation discrète à l'aide de binômes, selon la relation $s = \frac{m}{2}$, s étant le paramètre d'échelle continu du noyau de Gauss et m l'ordre discret du binôme,
c)ii sélection d'un coefficient de développement d'un ordre tel qu'il permette une bonne approximation de l'information en valeurs de gris par la fonction de base,
c) iii rotation algébrique des coefficients de développement à l'aide du théorème de rotation pour des polynômes de Hermite de telle sorte que des coefficients cartésiens sont transformés en coefficients d'une base de train d'ondes WB,
c)iv adaptation des modules de coefficients à la fonction périodique de modèles d'une base de train d'ondes (WB),

d) enregistrement du résultat, contenant un coefficient vectoriel à deux composantes, comme distribution d'orientations dans une mémoire, et
e) sélection d'un pixel suivant et répétition des étapes a) à d) jusqu'à ce que la distribution d'orientations des pixels de la structure de lignes soit enregistrée dans la mémoire.

**2.** Procédé selon la revendication 1, dans lequel on effectue un lissage statistique des coefficients vectoriels déterminés par une formation de valeur moyenne.

**3.** Procédé selon l'une des revendications 1 ou 2, comportant une répétition du procédé avec au moins une deuxième fonction binomiale A(x, s) qui est associée à une autre échelle de grandeur décrivant les distances entre lignes.

**4.** Procédé selon la revendication 3, comportant une sélection de la fonction de base la mieux adaptée et donc du coefficient vectoriel dont la mesure de qualité q par rapport à l'orientation et à la distance entre lignes est la plus grande, cette pondération étant obtenue au moyen de la production d'une fonction de pondération

$$\omega_i = \frac{q_i}{\sum_i q_i}$$

des modules individuels, le résultat de sélection considéré étant enregistré dans une mémoire comme image en valeurs de gris et comme distribution d'orientations.

**5.** Procédé selon l'une des revendications précédentes, dans lequel on forme le module de chaque coefficient vectoriel et on le mémorise sous la forme d'une carte de qualité qui illustre la qualité de la reconstruction d'une structure de lignes.

**6.** Procédé selon la revendication 5, comportant une segmentation du résultat de reconstruction au moyen d'un traitement à valeur de seuil de la carte de qualité, traitement dans lequel tous les pixels ayant une qualité supérieure à une certaine valeur de seuil sont associés à une structure de lignes valable.

**7.** Procédé selon l'une des revendications précédentes, comportant une détermination de singularités (SI) à partir de la distribution d'orientations mémorisée en formant l'intégrale normée de la variation d'angle du champ environnant.

**8.** Procédé selon la revendication 7, comportant un contrôle de coefficients vectoriels présents dans l'environnement d'une singularité (SI) et avec une mémorisation des données en vue de la recherche d'une singularité (SI) reconnue comme vraie.

**9.** Procédé selon l'une des revendications précédentes, comportant une reconstruction de tous les pixels à partir de l'image en valeurs de gris afin de former une image binaire, la valeur limite pour une distinction entre blanc et noir étant posée à la valeur de gris 0.

**10.** Procédé selon la revendication 8, comportant une formation du squelette de l'image binaire de telle sorte que la largeur de ligne est réduite pas à pas à la largeur d'un pixel.

**11.** Procédé selon la revendication 10, comportant

- une sélection successive d'extraits d'images en pixels, chacun de grandeur 3x3, à partir de l'image binaire en squelette,
- une comparaison de ces extraits d'image en pixels avec des modèles en pixels de même grandeur qui contiennent des ramifications ou des extrémités de lignes, et
- une mémorisation des coordonnées de point d'image en cas de résultat de comparaison positif.

**12.** Procédé selon la revendication 11, comportant une évaluation de la fiabilité d'un détail trouvé (MI) à l'aide de la mesure de qualité, mémorisée dans la carte de qualité, dans l'environnement de chaque détail (MI).

**13.** Dispositif de reconstruction de structures de lignes présentes sous forme de trames, notamment d'empreintes digitales, comportant les moyens suivants :

a) - des moyens pour la sélection d'un extrait d'image disposé autour d'un pixel à partir d'une image d'une structure de lignes présente sous forme de pixels et numérisée en valeurs de gris,
b) - des moyens pour l'imitation locale de l'information en valeurs de gris par une fonction de base unidimensionnelle $\Psi_n(x, s)$ qui est mise en relation avec une fonction binomiale A(x, s) bidimensionnelle, définissant l'extrait d'image et pondérée, selon :

$$\Psi_n(x, s) = \left(\frac{1}{\sqrt{4s}}\right)^n \Phi_n(\xi)A(x, s)$$

c) des moyens pour la détermination d'une orientation préférée, existant pour le pixel sélectionné en relation avec son environnement, des lignes traversant le point d'image, au moyen des opérations suivantes :

c)i développement de la fonction de base formulée dans le domaine continu $\Psi_n(x, s)$, qui est considérée comme un opérateur de dérivation à pondération de Gauss, suivant une approximation discrète à l'aide de binômes, selon la relation $s = \frac{m}{2}$, s étant le paramètre d'échelle continu du noyau de Gauss et m l'ordre discret du binôme,
c)ii sélection d'un coefficient de développement d'un ordre tel qu'il permette une bonne approximation de l'information en valeurs de gris par la fonction de base,
c) iii rotation algébrique des coefficients de développement à l'aide du théorème de rotation pour des polynômes de Hermite de telle sorte que des coefficients cartésiens sont transformés en coefficients d'une base de train d'ondes WB,
c)iv adaptation des modules de coefficients à la fonction périodique de modèles d'une base de train d'ondes (WB),

d) des moyens pour l'enregistrement du résultat, contenant un coefficient vectoriel à deux composantes, comme distribution d'orientations dans une mémoire, et
e) des moyens pour la sélection d'un pixel suivant et pour la répétition des étapes a) à d) jusqu'à ce que la distribution d'orientations des pixels de la structure de lignes soit enregistrée dans la mémoire.

**14.** Dispositif selon la revendication 13, comportant des moyens pour le lissage statistique des coefficients vectoriels déterminés par une formation de valeur moyenne.

**15.** Dispositif selon l'une des revendications 13 ou 14, comportant des moyens pour la répétition du procédé avec au moins une deuxième fonction binomiale A(x,s) qui est associée à une autre échelle de grandeur décrivant les distances entre lignes.

**16.** Dispositif selon la revendication 15, comportant des moyens pour la sélection de la fonction de base la mieux adaptée et donc du coefficient vectoriel dont la mesure de qualité q par rapport à l'orientation et à la distance entre lignes est la plus grande, cette pondération étant obtenue au moyen de la production d'une fonction de pondération

$$\omega_i = \frac{q_i}{\sum_i q_i}$$

des modules individuels, le résultat de sélection considéré étant enregistré dans une mémoire comme image en valeurs de gris et comme distribution d'orientations.

**17.** Dispositif selon l'une des revendications précédentes 13 à 16, dans lequel il est prévu des moyens pour la formation du module de chaque coefficient vectoriel et pour la mémorisation de celui-ci sous la forme d'une carte de qualité qui illustre la qualité de la reconstruction d'une structure de lignes.

**18.** Dispositif selon la revendication 17, comportant des moyens pour la segmentation du résultat de reconstruction au moyen d'un traitement à valeur de seuil de la carte de qualité, traitement dans lequel tous les pixels ayant une qualité supérieure à une certaine valeur de seuil sont associés à une structure de lignes valable.

**19.** Dispositif selon l'une des revendications précédentes 13 à 18, comportant des moyens pour la détermination de singularités (SI) à partir de la distribution d'orientations mémorisée en formant l'intégrale normée de la variation d'angle du champ environnant.

**20.** Dispositif selon la revendication 19, comportant des moyens pour le contrôle de coefficients vectoriels présents dans l'environnement d'une singularité (SI) et pour la mémorisation des données en vue de la recherche d'une singularité (SI) reconnue comme vraie.

**21.** Dispositif selon l'une des revendications précédentes 13 à 20, comportant des moyens pour la reconstruction de tous les pixels à partir de l'image en valeurs de gris afin de former une image binaire, la valeur limite pour une distinction entre blanc et noir étant posée à la valeur de gris 0.

**22.** Dispositif selon la revendication 20, comportant des moyens pour la formation du squelette de l'image binaire de telle sorte que la largeur de ligne est réduite pas à pas à la largeur d'un pixel.

**23.** Dispositif selon la revendication 22, comportant des moyens pour

- une sélection successive d'extraits d'images en pixels, chacun de grandeur 3x3, à partir de l'image binaire en squelette,
- une comparaison de ces extraits d'image en pixels avec des modèles en pixels de même grandeur qui contiennent des ramifications ou des extrémités de lignes, et
- une mémorisation des coordonnées de point d'image en cas de résultat de comparaison positif.

**24.** Dispositif selon la revendication 23, comportant des moyens pour l'évaluation de la fiabilité d'un détail trouvé (MI) à l'aide de la mesure de qualité, mémorisée dans la carte de qualité, dans l'environnement de chaque détail (MI).

FIG 1

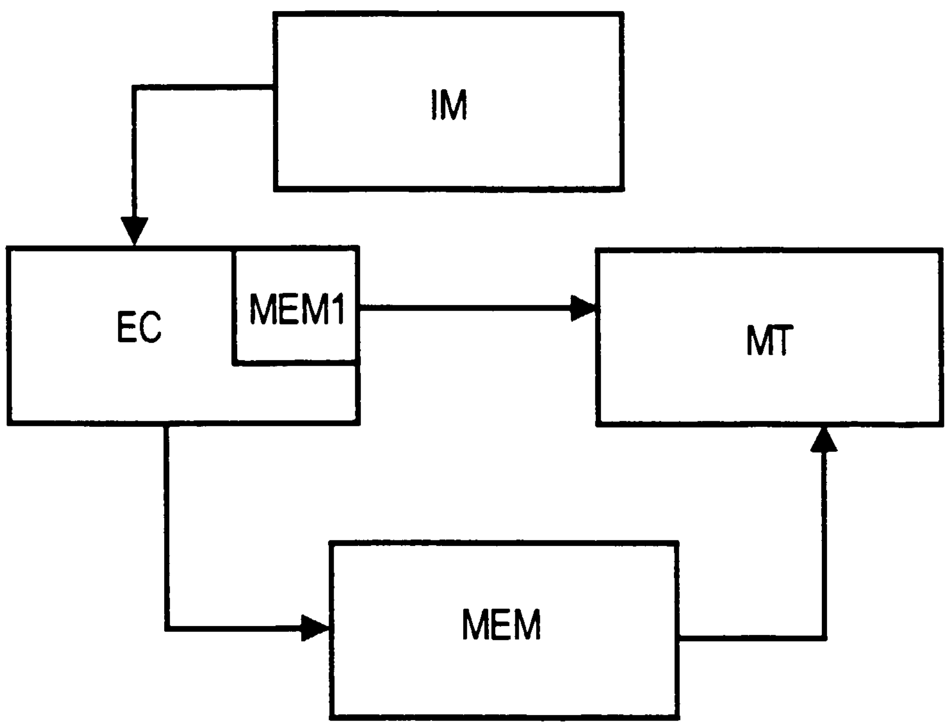

FIG 2a

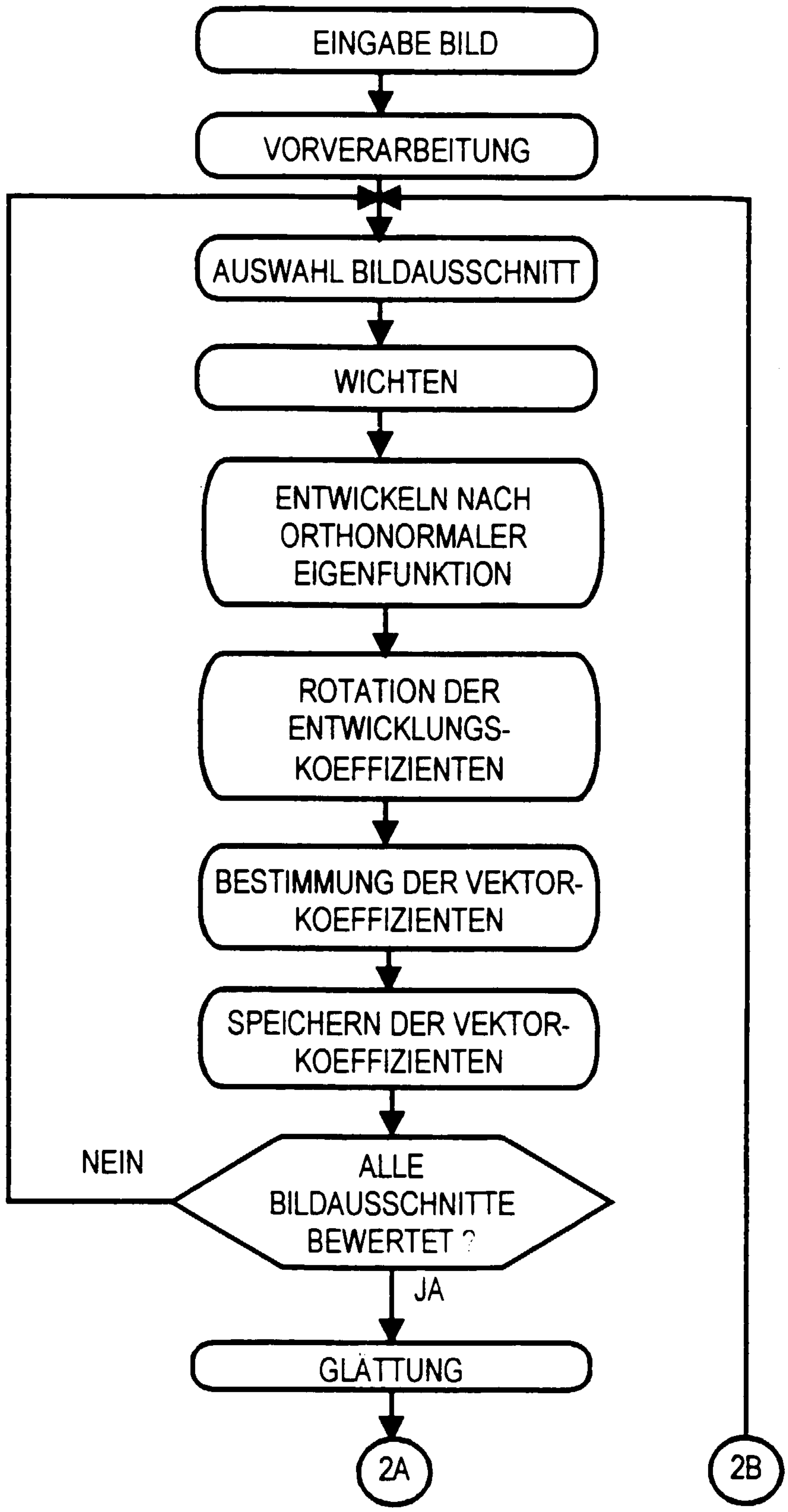
EINGABE BILD
VORVERARBEITUNG
AUSWAHL BILDAUSSCHNITT
WICHTEN
ENTWICKELN NACH ORTHONORMALER EIGENFUNKTION
ROTATION DER ENTWICKLUNGS-KOEFFIZIENTEN
BESTIMMUNG DER VEKTOR-KOEFFIZIENTEN
SPEICHERN DER VEKTOR-KOEFFIZIENTEN
NEIN
ALLE BILDAUSSCHNITTE BEWERTET ?
JA
GLÄTTUNG
2A
2B

FIG 2b

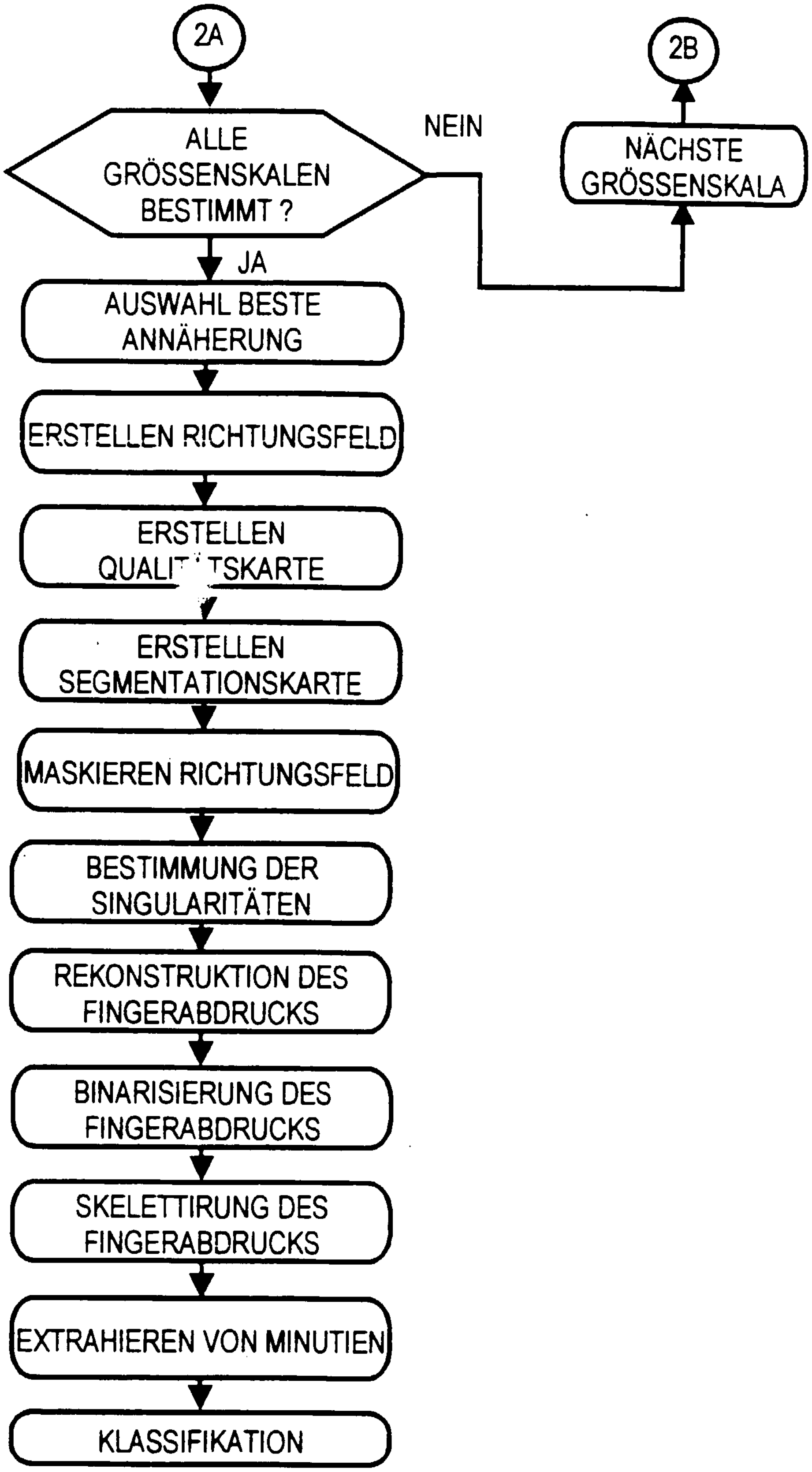
2A
ALLE GRÖSSENSKALEN BESTIMMT ?
NEIN
2B
NÄCHSTE GRÖSSENSKALA
JA
AUSWAHL BESTE ANNÄHERUNG
ERSTELLEN RICHTUNGSFELD
ERSTELLEN QUALITÄTSKARTE
ERSTELLEN SEGMENTATIONSKARTE
MASKIEREN RICHTUNGSFELD
BESTIMMUNG DER SINGULARITÄTEN
REKONSTRUKTION DES FINGERABDRUCKS
BINARISIERUNG DES FINGERABDRUCKS
SKELETTIRUNG DES FINGERABDRUCKS
EXTRAHIEREN VON MINUTIEN
KLASSIFIKATION

FIG 3

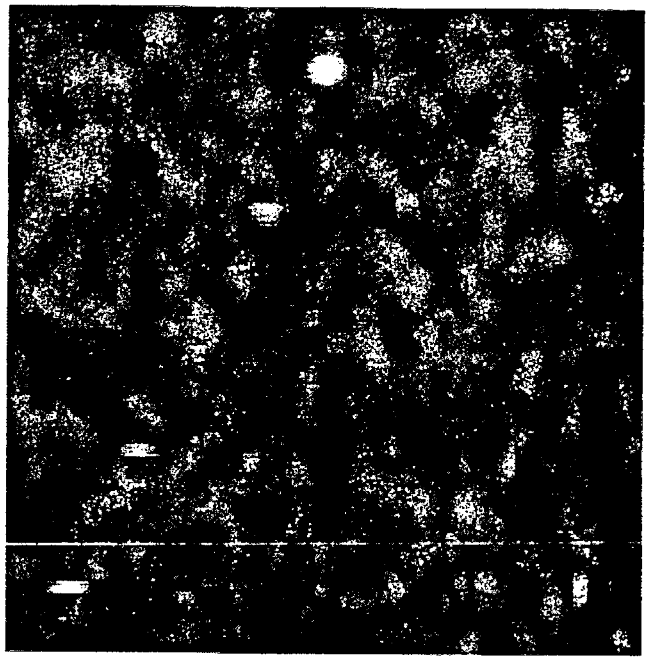

FIG 4

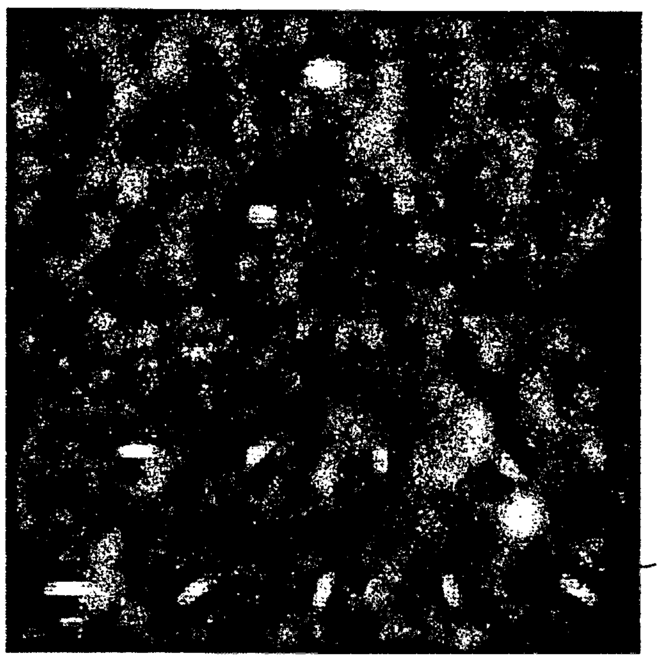

FIG 5

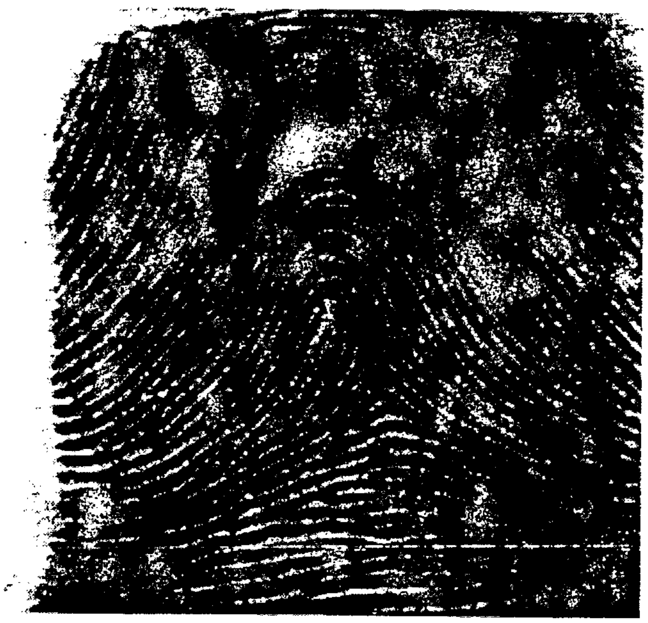

FIG 6

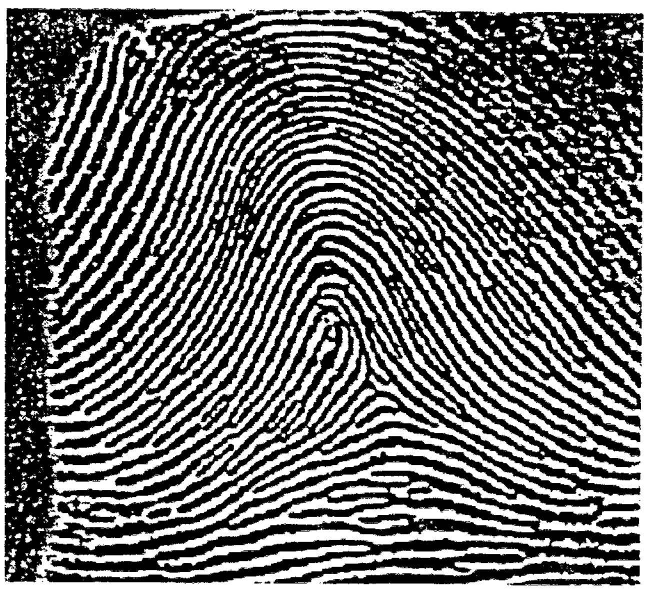

FIG 7

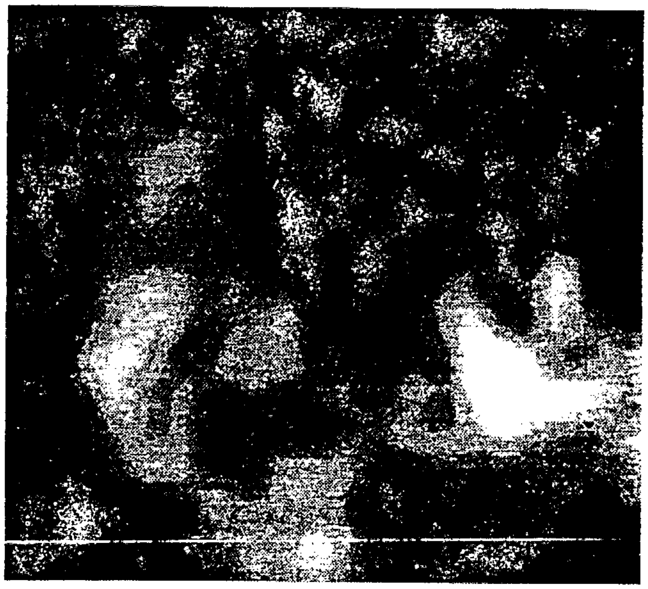

FIG 8

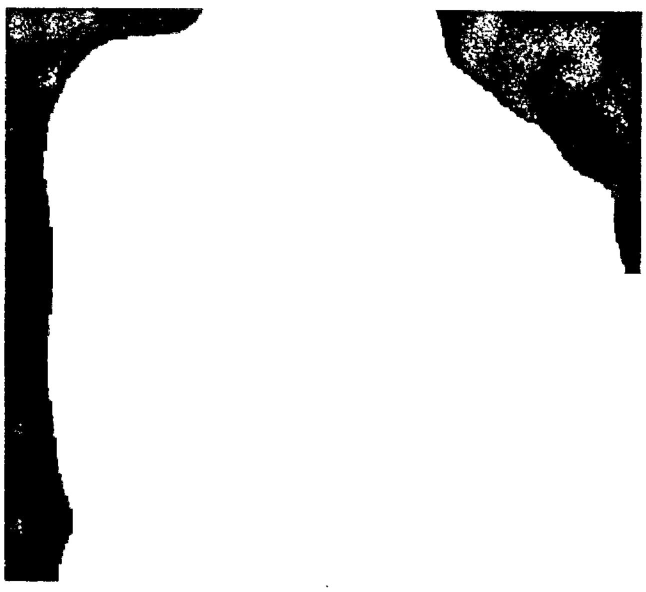

FIG 9

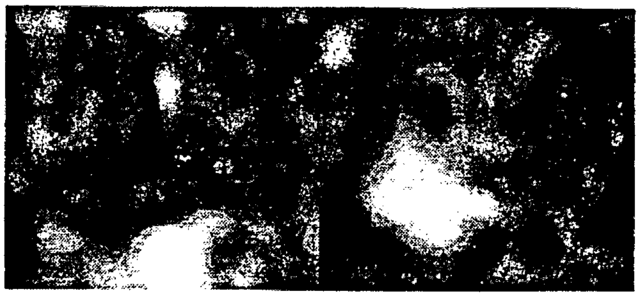

FIG 10

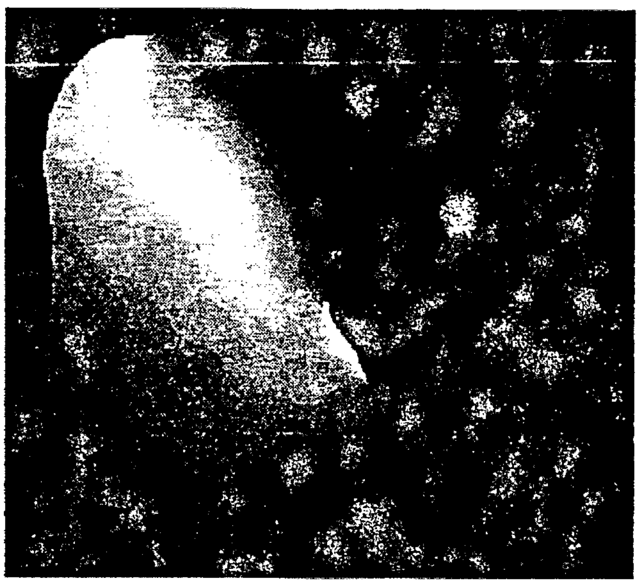

FIG 11

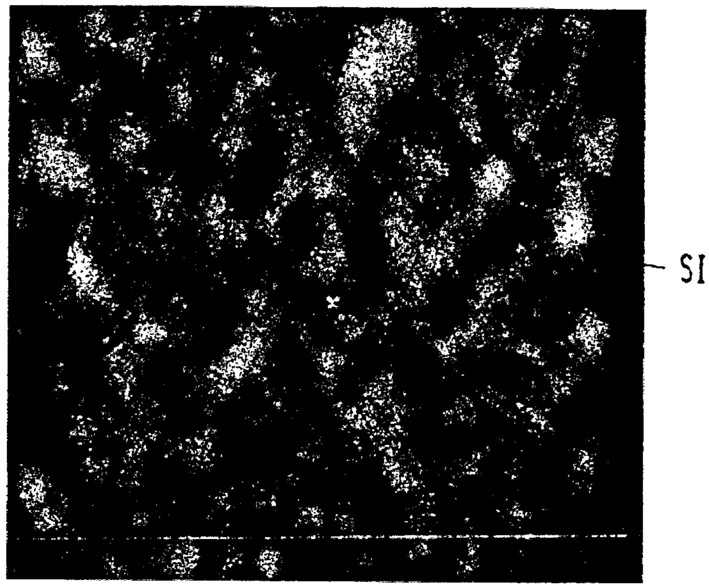


FIG 12

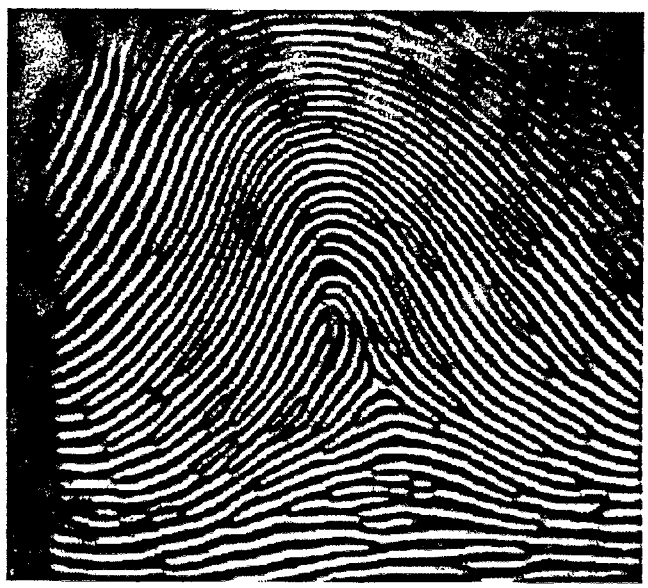

FIG 13

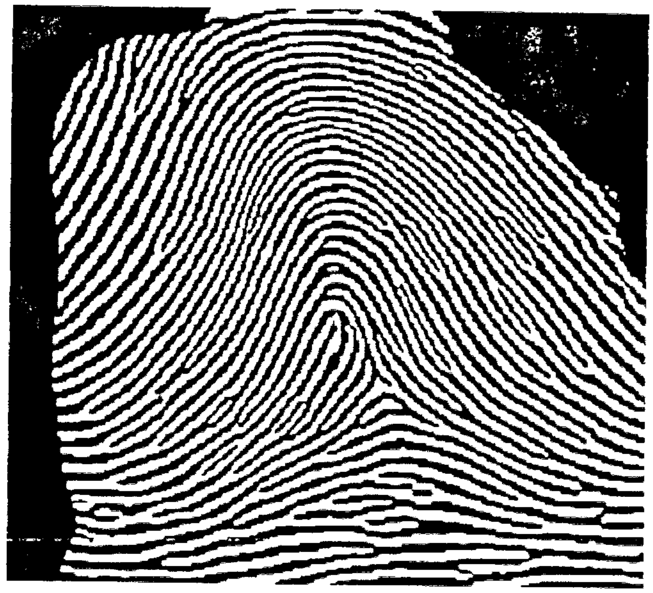

FIG 14

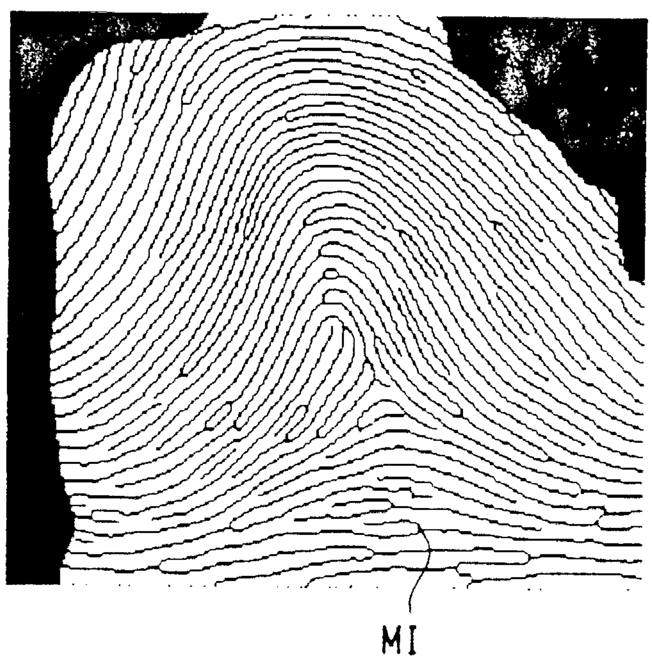

FIG 15